Europäisches Patentamt

European Patent Office

Office européen des brevets

(11) Publication number: **0 387 847 B1**

(12) **EUROPEAN PATENT SPECIFICATION**

(45) Date of publication of patent specification: 04.05.94

(51) Int. Cl.5: **G11B 23/00**, G11B 23/037, G11B 23/087

(21) Application number: **90104833.0**

(22) Date of filing: **14.03.90**

Divisional application 93104702.1 filed on 14/03/90.

(54) **Hub for tape cassette.**

(30) Priority: **15.03.89 JP 60697/89**

(43) Date of publication of application:
**19.09.90 Bulletin 90/38**

(45) Publication of the grant of the patent:
**04.05.94 Bulletin 94/18**

(84) Designated Contracting States:
**DE FR GB LU NL**

(56) References cited:
**EP-A- 0 240 170**
**EP-A- 0 267 616**
**DE-A- 3 111 738**

**PATENT ABSTRACTS OF JAPAN vol. 7, no. 266 (P-239)(1411) 26 November 1983, & JP-A-58 147870 (DAIICHI SEIKOU KK) 2 September 1983,**

**PATENT ABSTRACTS OF JAPAN vol. 11, no. 91 (P-558) 23 March 1987, & JP-A-61 242378 (TOKICO LTD) 28 October 1986,**

(73) Proprietor: **TDK CORPORATION**
**13-1, Nihonbashi 1-chome**
**Chuo-ku Tokyo(JP)**

(72) Inventor: **Satoh, Takateru**
**318, Oaza Takayagi**
**Saku-shi, Nagano-ken(JP)**
Inventor: **Shiba, Haruo**
**273-8 Oaza-Kamasu**
**Komoro-shi, Nagano-ken(JP)**
Inventor: **Ikebe, Masaru**
**3367-35 Iwamurada**
**Saku-shi, Nagano-ken(JP)**
Inventor: **Suzuki, Hiroki**
**3252-2 Oaza-Nakagomi**
**Saku-shi, Nagano-ken(JP)**
Inventor: **Miyazaki, Yukio**
**3252-2 Oaza-Nakagomi**
**Saku-shi, Nagano-ken(JP)**

(74) Representative: **Schwan, Gerhard, Dipl.-Ing.**
**Elfenstrasse 32**
**D-81739 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

PATENT ABSTRACTS OF JAPAN vol. 10, no. 41 (P-429) 18 February 1986, & JP-A-60 187983 (NIPPON DENSHIN DENWA KOSHA) 25 September 1985,

PATENT ABSTRACTS OF JAPAN, vol 13, No 23 (E-705) 21 September 1988 & JP-A-63 227041 (MATSUSHITA ELECTRONICS GROUP) 17 March 1987

PATENT ABSTRACTS OF JAPAN, vol 01,no 100 (E-042) 16 March 1977& JP-A-52034708 (TEIJIN LTD) 12 September 1975

DERWENT PUBLICATIONS LTD.,LONDON,GB; DATABASE WPIL,accession number 89-112423, week 8915; & JP-A-58147870 (DAIICHI SEIKO KK) 02 September 1983

## Description

The present invention relates to a hub for a tape cassette.

A tape cassette such as a video tape cassette, an audio tape cassette, etc. has a pair of tape winding hubs to wind a tape thereon. This kind of hub is generally made of polyacetal (POM) or polycarbonate, etc. and comprises a hub body having a recess formed in a part of the periphery of the hub, and a tape clamp snapped in the recess. The present invention is applied to the hub body,and in some cases to the clamp,too.

One end of a magnetic tape is fixed by fitting a clamp in the recess formed on the hub. In this case, a step or difference in height is often formed between the clamp and the hub, and there is a possibility of this step being transferred, after long hours of non-use, to the magnetic tape to form creases, which cause increase in error rate. If the creases are large, a gap will be created between the tape and the head which, due to the spacing loss, causes reduction of output and read out error, etc. Even if an error occurs, previously registered data can be restored to some degree by interpolation if the error rate is low, while, if there are too many errors, a muting condition, i.e. a state of no sound will result.

Demands for performances of a tape casseette are becoming more and more severe. For example, regarding recorcding/reproduction, a DAT cassette for audio or information is now on the market. However, it is necessary to restrain as much as possible wrong recording or read out error rate (the so-called " error rate ") of digital information to improve fidelity. Even in other analog recording systems, it is necessary to improve not only the performance of a digital tape but also the mechanical performance of a cassette by slowing down the speed of the tape. Referring to a DAT tape, the present situation is that the error rate of the portion of a digital tape wound near the hub is worse compared with the other portions. More particularly, a digital tape stored for a long period of time or stored at high temperatures has this tendency, and errors in interpolation area are not allowed for information use, although it is allowed for music use. The target for the time being is to restrain it in the order of $10^{-2}$ (one piece among 100 pieces of the error rate according to the high temperature storage test to be defined hereafter), and further reduction is desired.

To solve this problem improvements in design have been made, including a reduction of the difference in height and gap between the hub body and the clamp, or a restriction of sink marks (local thermal contractions at the time of injection molding) but, nevertheless, a satisfactory solution has not been offered yet.

A hub for audio tape cassettes and used for winding a tape thereabout, with the hub body having a coefficient of linear expansion of 2.2 to 4.0 x $10^{-5}$ cm/cm ° C is known from Patent Abstracts of Japan Vol. 7, No. 266 (P-239) [1411] and JP-A-58 147 870. Particularly, it is stressed in this reference that the hub should have a coefficient of linear expansion as close as possible to that of the base film of the tape. In conformity therewith the use of a polyester base film (PET) having a coefficient of linear expansion of 2.7 x $10^{-5}$ cm/cm ° C in combination with a tape hub consisting of a composite material prepared by blending 100 pts.wt. thermoplastic resin with 150 to 500 pts.wt. in total of one or more kinds of powdered filters selected from a metal having ≧ 3 specific gravity, oxide, hydroxide and salts of the metal and 1 to 50 pts.wt. organic fibers such as aromatic polyamide fibers combined optionally with 1 to 50 pts.wt. of at least one kind of highly elastic reinforcing fibers such as glass fibers or carbon fibers, said composite material having a coefficient of linear expansion of 2.7 to 3.0 x $10^{-5}$ cm/cm ° C, is described.

The object of the present invention is to provide a hub to be used for a tape cassette with high stability of dimensions.

According to the present invention, a hub for a tape cassette including a hub body and a tape clamp is characterized in that the hub body has a coefficient of linear expansion of about 3.6 x $10^{-5}$ cm/cm ° C or less at ambient temperatures of minus 10 to 90 ° C, and that the material of the hub body is selected from all aromatic polyester and all aromatic polyester containing an inorganic filler. These materials improve the stability of dimensions for a wide range of temperatures of use and improve the characteristics of a cassette tape.

As the material for a hub body of the present invention is selected from a group consisting of all aromatic polyester and all aromatic polyester containing inorganic fillers, the rate of molding contraction at the time of plastic molding is very low and therefore the accuracy of dimension of the hub's peripheral surface is very high. In this case, high temperature stability of finished articles is enhanced, the dimensions are little changed after long period of storage at high temperatures and, accordingly, the characteristics of registration/reproduction of the tape cassette using this hub are improved.

When, for example, the hub is used for a DAT cassette, the error rate decreases sharply. When the present invention is applied to other types of cassette, a suitable effect by stability can be attained.

In the course of efforts to reform a conventional hub, it was found that the aforementioned problems of a conventional hub, namely, the causes which increase the error rate, depend greatly upon the accuracy of dimensions at the time of plastic molding and the aging after that. At the time of molding, a conventional hub has a comparatively large coefficient of linear expansion, which, for example, is $10\text{-}12 \times 10^{-5}$ cm/cm °C with polyacetal and $8 \times 10^{-5}$ cm/cm °C with polycarbonate. This causes deformation of the peripheral surface of molded articles due to which sink marks or the like caused by local variations of thickness damage the true cylindricity of the peripheral surface. After molding,too, the dimensions of the hub tend to be changed by aging under the effect of temperature, etc. which causes a local change of the diameter of the hub and a deviation from the true cylindricity of the peripheral surface.

In accordance with the present invention, it has been found that the conventional problems can be solved by a hub comprising a hub body and a tape clamp snapped in a recess of the hub body, which is characterized in that the hub body( and in some cases the tape clamp as well) is formed from a material selected from a group consisting of all aromatic polyester and all aromatic polyester containing inorganic fillers. The all aromatic polyester is known as a liquid crystal polymer which is comprised of a rigid high polymer (for example, it is sold under trade name VECTRA by Cellanese Corp.of U.S.A.) and its molecule chain can not be easily bent even in the state of solution. This resin could be used alone as a clamp in the present invention. More preferably, inorganic fillers for example carbon fibers are mixed to the resin to further improve the stability of dimensions. The coefficient of linear expansion of such a liquid crystal polymer is about $3.6 \times 10^{-5}$ cm/cm °C under minus 10 - 90 °C, and when mineral fibers, powder or carbon fibers are mixed therein, the stability of dimensions are improved to below $3.6 \times 10^{-5}$ cm/cm °C under minus 10 to 90 °C and the dimensions are little changed by temperature variation. Consequently, a hub with little contraction and, accordingly, a hub body with a peripheral surface of true cylindricity can be obtained. Furthermore, it has been found that the superior temperature stability thereof leads to a low error rate which is little changed from that of the beginning for a long period of time.

Inorganic fillers which may be used in the present invention include zinc oxide, titanium oxide, mineral powder and/or carbon fibers. The use of 5 to 10 wt% of them incorporated into the resin further improves the stability of the dimensions.

The invention will now be described in detail in the following in connection with preferred embodiments of the invention with reference to the drawings in which Fig. 1 shows a front view of a hub of a preferred embodiment of the present invention; Fig. 2 shows the side view of the hub in Fig,1; and Fig.3 shows a graph showing the change in size or dimension by aging of the preferred examples and comparative examples.

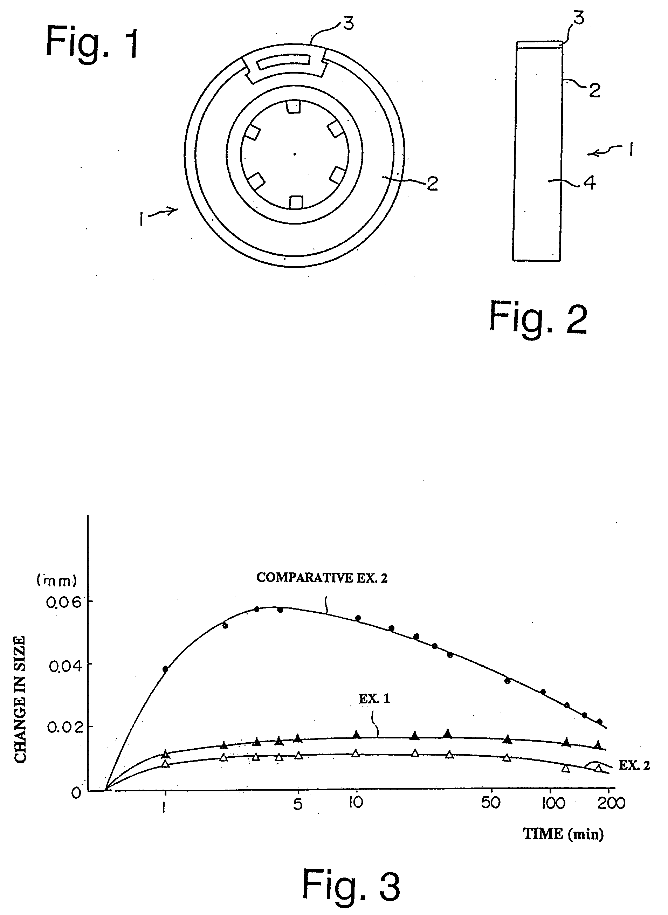

The embodiments will now be explained by making reference to an example of a DAT cassette. Figs. 1 and 2 illustrate a tape winding hub 1 according to the present invention, wherein the hub 1 consists of a hub body 2 and a tape clamp 3 which is snapped in a recess of the hub body. A structure of this kind is conventional. According to one aspect of the present invention, hub body 2 (or together with clamp 2) of this construction is made of the above-mentioned liquid crystal polymer containing a filler.

The present invention will, hereafter, be further explained in detail referring to comparative examples and preferred examples.

Examples 1, 2, 3 and Comparative Examples 1, 2, 3

The hub body of the structure in Figs. 1 and 2 was made by molding of various kinds of plastic materials. As an example, VECTRA (trade name of an all aromatic polyester produced by Cellanese of U.S.A.) was used as a liquid crystal polymer to mold hubs. The hub body without containing any fillers is Example 1, the one with 10 wt% of added mineral powder is Example 2, and the one with 10 wt% of added carbon fibers is Example 3. The one using ABS-polystyrene copolymer is shown as Comparative Example 1, the one using polyacetal (POM) is shown as Comparative Example 2, and the one using polycarbonate is shown as Comparative Example 3.

Ratio of Molding Contraction

The result of the measured ratio of molding shrinkage or contraction of the aforementioned hubs is listed in Table 1.

Further, the ratio of molding contraction was obtained from the measured shrinkage of diameter (at 90 degrees from the recess for a clamp) of the hub body based on metal mold dimensions.

As is seen from Table 1, POM, etc. have comparatively high ratios of contraction. In contrast, the ratio of molding contraction of the hub body made of a liquid crystal polymer is about 0.05%, which is comparatively low. Further improvement is achieved when fillers are used.

Stability

Further, error rates of the samples and a few articles on the market were measured. Using an equipment for a DAT cassette, recording / reproduction error rates were first measured for 6 minutes from the start of winding of a magnetic tape which was then reeled in the play mode and stored for 3 hours in a space at a constant temperature of 80 °C and 0% RH and therafter the error rates were measured again. The result is shown in Table 2. Table 2 indicates the number of samples with which errors occurred against the total number of test samples. It is normally required that the error rate after storage be below $10^{-2}$.

As seen from Table 2, the error rate is lower with liquid crystal polymer and higher with POM.

The result of change in hub dimensions in the same condition of 80°C, 0% RH is shown in Fig. 3 togher with other examples described below.

Examples 4 - 7

When tests were conducted on the clamps using the materials of Examples 1 - 3, the liquid crystal polymer had a high coefficient of bending elasticity and was easily deformed due to creap.

Therefore, when the clamp was snapped in the hub and used, the end of tape could not be fixed firmly in position due to the plastic deformation of the clamp ( Comparative Examples 4 - 6). To overcome this inconvenience the molding was examined. However, it was not easy to redesign it because the material had a high coefficient of bending elasticity and easy plastic deformation.

That is why a molding test of the hub was made using materials with low coefficients of linear expansion and low plastic deformation. Namely, the clamp and hub were molded from various kinds of materials shown in Table 3 ( Examples 4 - 7). The characteristics thereof are shown in Table 3.

Similar experiments of combination of the hub Examples 1 - 3 and polyacetal are also shown.

Table 4 shows the result of measurement of the error rate and muting of the clamp and hub of Examples 4 - 7. In Comparative Example 7 polyacetal (POM) was used for the hub and clamp, and in Comparative Example 8 polycarbonate was used for the both.

Table 1

| | Name of Material | Coefficient of Molding Contraction |
|---|---|---|
| Example 1 | Liquid crystal polymer | 0.05 - 0.10 |
| Example 2 | Liquid crystal polymer + mineral powder or liquid crystal polymer + titanium oxide or liquid crystal polymer + zinc oxide | 0.04 - 0.08 |
| Example 3 | Liquid crystal polymer + carbon fibers | 0.04 - 0.08 |
| Comparative Example 1 | ABS - polystyrene copolymer | 0.40 - 0.60 |
| Comparative Example 2 | Polyacetal POM | 2.00 - 2.30 |
| Comparative Example 3 | Polycarbonate | 0.50 - 0.80 |

EP 0 387 847 B1

Table 2 :   Change of Error Rate After High Temperature Storage

$10^{-1} \leftarrow$ Bad, Good $\rightarrow 10^{-4}$

| Conditions 80°C Dry 3 hrs. | Before Storage | | | After Storage | | | |
|---|---|---|---|---|---|---|---|
| | $10^{-2}$ | $10^{-3}$ | $10^{-4}$ | $10^{-1}$ | $10^{-2}$ | $10^{-3}$ | $10^{-4}$ |
| Ex. 1 | | 5/5 | | | 1/5 | 4/5 | |
| Ex. 2 | | 5/5 | | | 1/5 | 4/5 | |
| Ex. 3 | | 5/5 | | | 1/5 | 4/5 | |
| Com. Ex.1 | | 5/5 | | 3/5 | 2/5 | | |
| Com. Ex.2 | | 4/5 | 1/5 | 4/5 | 1/5 | | |
| Com. Ex.2 | | 5/5 | | 3/5 | 2/5 | | |
| Sample A | 1/15 | 12/15 | 3/15 | 13/15 | 1/15 | 1/15 | |
| Sample B | | 5/13 | 8/13 | 6/13 | 7/13 | | |
| Sample C | | 2/6 | 4/6 | 1/6 | 2/6 | 3/6 | |
| Sample D | | 4/6 | 2/6 | 5/6 | 1/6 | | |

EP 0 387 847 B1

## Table 3

| | Material of Hub | Coefficient of Linear Expansion | Coefficient of Bending Elasticity |
|---|---|---|---|
| Ex. 1 | Liquid crystal polymer | $3.6 \times 10^{-5}$ | $90000 kg/cm^2$ |
| Ex. 2 | Ex.1 + mineral powder | $2.8 \times 10^{-5}$ | $140000 kg/cm^2$ |
| Ex. 3 | Ex.1 + carbon fiber | $0.8 \times 10^{-5}$ | $260000 kg/cm^2$ |
| Ex. 4 | Ex.1 + mineral powder | $2.8 \times 10^{-5}$ | $140000 kg/cm^2$ |
| Ex. 5 | Ex.1 + carbon fiber | $0.8 \times 10^{-5}$ | $260000 kg/cm^2$ |
| Ex. 6 | Ex.1 + mineral powder | $2.8 \times 10^{-5}$ | $140000 kg/cm^2$ |
| Ex. 7 | Ex.1 + carbon fiber | $0.8 \times 10^{-5}$ | $260000 kg/cm^2$ |
| C.Ex. 4 | Liquid crystal polymer | $3.6 \times 10^{-5}$ | $90000 kg/cm^2$ |
| C.Ex. 5 | Ex. 1 + mineral powder | $2.8 \times 10^{-5}$ | $140000 kg/cm^2$ |
| C.Ex. 6 | Ex. 1 + carbon fiber | $0.8 \times 10^{-5}$ | $260000 kg/cm^2$ |

| | Material of Clamp | Coefficient of Bending Elasticity | Deformation Molded Clamp |
|---|---|---|---|
| Ex. 1 | POM | $90000 kg/cm^2$ | No |
| Ex. 2 | POM | $140000 kg/cm^2$ | No |
| Ex. 3 | POM | $260000 kg/cm^2$ | No |

| | | | |
|---|---|---|---|
| Ex. 4 | POM + Potassium titanate | $140000 kg/cm^2$ | No |
| Ex. 5 | POM + Potassium titanate | $260000 kg/cm^2$ | No |
| Ex. 6 | POM + Carbon Fiber | $140000 kg/cm^2$ | No |
| Ex. 7 | POM + Carbon Fiber | $260000 kg/cm^2$ | No |
| C.Ex. 4 | Same as Hub | $90000 kg/cm^2$ | x (Yes) |
| C.Ex. 5 | Same as Hub | $140000 kg/cm^2$ | x (Yes) |
| C.Ex. 6 | Same as Hub | $260000 kg/cm^2$ | x (Yes) |

Table 4

| | Coefficient of Linear Ex. | Error Rate of Beginning | Stored at 60 °C 72hr | | Stored at 70 °C 72hr | |
|---|---|---|---|---|---|---|
| | | | Error Rate | Muting | Error Rate | Muting |
| Ex. 4 | $2.8 \times 10^{-5}$ | $2.0 \times 10^{-4}$ | $3.0 \times 10^{-4}$ | O | $4.0 \times 10^{-4}$ | O |
| Ex. 5 | $0.8 \times 10^{-5}$ | $1.5 \times 10^{-4}$ | $2.0 \times 10^{-4}$ | O | $3.0 \times 10^{-4}$ | O |
| Ex. 6 | $2.8 \times 10^{-5}$ | $1.5 \times 10^{-4}$ | $2.8 \times 10^{-4}$ | O | $3.5 \times 10^{-4}$ | O |
| Ex. 7 | $0.8 \times 10^{-5}$ | $1.8 \times 10^{-4}$ | $3.5 \times 10^{-4}$ | O | $4.5 \times 10^{-4}$ | O |
| C.Ex. 7 | $10-12 \times 10^{-5}$ | $2.0 \times 10^{-4}$ | $2.0 \times 10^{-2}$ | X | $4.0 \times 10^{-2}$ | X |
| C.Ex. 8 | $8.0 \times 10^{-5}$ | $1.5 \times 10^{-4}$ | $1.5 \times 10^{-2}$ | X | $2.0 \times 10^{-2}$ | X |

From the aforesaid results it was found that, when at least a hub body was composed of all aromatic polyester, or all aromatic polyester containing inorganic fillers, having a coefficient of linear expansion of about $3.6 \times 10^{-5}$ cm/cm °C or less at ambient temperatures of minus 10 - 90 °C, the error rate little increased after long periods of storage under high ambient temperatures, and its initial characteristics were maintained.

**Claims**

1. A hub for winding a tape thereabout for a tape cassette consisting of a hub body (2) and a tape clamp (3) fitted in a recess of the periphery of the hub body (2), the hub body (2) having a coefficient of linear expansion of about $3.6 \times 10^{-5}$ cm/cm·C or less at ambient temperatures of minus 10 °C to 90°C, characterized in that the material of the hub body is selected from all aromatic polyester and all aromatic polyester containing an inorganic filler.

2. A hub of a tape cassette of claim 1, wherein the inorganic filler is selected from the group consisting of zinc oxide and carbon fibers.

3. A hub of a tape cassette of claim 1, wherein the clamp (3) is made of a material selected from polyacetal and polyacetal containing an inorganic filler.

**Patentansprüche**

1. Nabe zur Aufwickeln eines Bandes für eine Bandkassette, bestehend aus einem Nabenkörper (2) und einer Bandklemme (3), die in eine Ausnehmung am Umfang des Nabenkörpers (2) eingepaßt ist, wobei der Nabenkörper (2) einen linearen Ausdehnungskoeffizienten von etwa $3,6 \times 10^{-5}$ cm/cm·C oder weniger bei Umgebungstemperaturen von minus 10°C bis 90°C hat, **dadurch gekennzeichnet,** daß der Werkstoff des Nabenkörpers aus vollaromatischem Polyester und einen anorganischen Füllstoff enthaltendem vollaromatischem Polyester ausgewählt ist.

2. Nabe für eine Bandkassette nach Anspruch 1, wobei der anorganische Füllstoff aus der aus Zinkoxid und Kohlefasern bestehenden Gruppe ausgewählt ist.

3. Nabe für eine Bandkassette nach Anspruch 1, wobei die Klemme (3) aus einem Werkstoff gefertigt ist, der aus Polyacetal und einen anorganischen Füllstoff enthaltendem Polyacetal ausgewählt ist.

**Revendications**

1. Moyeu pour enrouler autour de lui une bande pour une cassette à bande, constitue d'un corps (2) de moyeu et d'une bride (3) de bande ajustée dans un évidement de la périphérie du corps (2) de moyeu, le corps (2) de moyeu ayant un coefficient de dilatation linéaire d'environ $3,6 \times 10^{-5}$ cm/cm·C ou moins, à des températures ambiantes de -10°C à 90°C, caractérisé en ce que la matière du corps du moyeu est choisie parmi un polyester entièrement aromatique et un polyester entièrement aromatique contenant une charge inorganique.

2. Moyeu d'une cassette à bande selon la revendication 1, dans lequel la charge inorganique est choisie dans le groupe constitué d'oxyde de zinc et de fibres de carbone.

3. Moyeu d'une cassette à bande selon la revendication 1, dans lequel la bride (3) est réalisée en une matière choisie entre un polyacétal et un polyacétal contenant une charge inorganique.

# Fig. 1

# Fig. 2

COMPARATIVE EX. 2

EX. 1

EX. 2

(mm)

0.06

0.04

0.02

0

CHANGE IN SIZE

1    5   10        50   100  200

TIME (min)

# Fig. 3